# FASCICULE DE BREVET EUROPEEN

(11) **EP 3 058 812 B1**
(45) Date de publication et mention de la délivrance du brevet: **29.11.2017**
(21) Numéro de dépôt: 16305186.5
(22) Date de dépôt: 18.02.2016
(51) Int. Cl.: A01K 1/06

(54) **STRUCTURE DE CONTENTION POUR ANIMAUX D'ÉLEVAGE, AVANTAGEUSEMENT CAGE DE CONTENTION**
STRUKTUR ZUM STILLHALTEN FÜR ZUCHTTIERE, INSBESONDERE FANGSTAND
CONTAINMENT STRUCTURE FOR LIVESTOCK, ADVANTAGEOUSLY CONTAINMENT CAGE

(30) Priorité: 20.02.2015 FR 1551452
(43) Date de publication de la demande: 24.08.2016
(73) Titulaire: Pasdelou Galva, 72550 Coulans sur Gee (FR)
(72) Inventeur: Cosnet, Gilbert, 72550 Degré (FR)
(74) Mandataire: Jacobacci Coralis Harle

(56) Documents cités:
- CA-A- 1 137 836
- FR-A1- 2 704 721
- US-A- 3 319 608

## Description

### DOMAINE TECHNIQUE AUQUEL SE RAPPORTE L'INVENTION

La présente invention concerne le domaine des structures de contention pour les animaux d'élevage, notamment du genre cages de contention.

### ARRIERE-PLAN TECHNOLOGIQUE

Des structures de contention sont couramment mises en oeuvre dans les installations pour élevage d'animaux, notamment pour leur manipulation.

En particulier, les animaux d'élevage sont fréquemment rassemblés dans un parc d'attente équipé d'une barrière de poussée et débouchant sur un couloir permettant de les organiser en file indienne.

Ce couloir débouche lui-même sur une cage de contention adaptée au gabarit d'un seul animal. Une telle structure est décrit dans le document US-3319608. Cette cage de contention permet alors différentes actions, notamment :
- le tri en fonction de l'âge, le poids, le sexe, etc., permettant d'envoyer les animaux dans des parcs distincts,
- la vaccination des animaux,
- la prise de sang,
- le parage des onglons,
- l'écornage,
- le pesage, etc.

Particulièrement en cas de pesage, il ne faut pas que l'animal dans la cage de contention soit perturbé par les animaux présents dans le couloir en amont ou que l'animal amont s'appuie sur la cage de contention (au risque de fausser la pesée).

En effet, en pratique, ce pesage nécessite un temps de quelques secondes (généralement de l'ordre de 5 à 10 s), durant lequel la cage de contention doit être isolée de l'animal amont pour éviter de fausser le résultat, voire de compromettre son obtention.

Il faut donc préserver un espace libre entre la paroi arrière de la cage de contention et le couloir, généralement de plusieurs dizaines de centimètres.

A ce jour, un système de double porte (ou sas), avec une porte au sein du couloir, permet de condamner un espace rendu inaccessible aux animaux en amont.

Toutefois, cette solution a l'inconvénient, particulièrement dans un système automatisé, de nécessiter une gestion automatique et synchronisée de l'ouverture et fermeture des portes, en toute sécurité.

Les risques de dysfonctionnements sont alors importants, et le coût de l'installation est élevé.

Il existe par conséquent un besoin d'une solution alternative, simple et efficace, pour tendre à maintenir les animaux d'élevage à distance de la paroi arrière de la cage de contention, et plus généralement d'une paroi verticale mobile au sein d'un système de contention.

### OBJET DE L'INVENTION

Dans ce contexte, la présente invention propose une solution, simple et efficace, pour tendre à maintenir les animaux d'élevage à distance d'une paroi verticale mobile au sein d'un système de contention.

A cet égard, l'invention concerne une structure de contention pour animaux d'élevage, selon la revendication 1, laquelle structure de contention comporte au moins une paroi verticale mobile qui est manoeuvrable entre deux positions :
- une position ouverte, destinée à autoriser le passage d'animaux, et
- une position fermée, destinée à empêcher le passage d'animaux,
laquelle au moins une paroi verticale mobile comporte deux faces verticales, opposées l'une par rapport à l'autre.

Et conformément à l'invention, ladite au moins une paroi verticale mobile est associée à au moins un élément souple qui est destiné à s'étendre dans une position saillante par rapport à l'une des faces verticales de ladite au moins une paroi verticale mobile en position fermée, pour tendre à maintenir les animaux d'élevage à distance de ladite face verticale.

En pratique, la présence de tels éléments souples va provoquer une crainte ou appréhension de l'animal en amont, avec en corolaire un phénomène de recul et de maintien en distance.

L'animal en regard des éléments souples va ainsi avoir tendance à rester à distance de la paroi verticale mobile équipée, évitant de perturber le cas échéant le ou les animaux en aval.

Selon un mode de réalisation préféré, la structure de contention est adaptée au gabarit d'un animal et elle est équipée de moyens de pesée.

Selon d'autres caractéristiques de réalisation, pouvant être prises en combinaison ou indépendamment :
- ledit au moins un élément souple est porté par ladite paroi verticale mobile ;
- ledit au moins élément souple a une forme générale allongée, et en position saillante, ledit au moins un élément souple s'étend : - en porte-à-faux par rapport à ladite paroi verticale mobile, ou - de manière convexe par rapport à ladite paroi verticale mobile ; dans ce cadre, ledit au moins un élément souple consiste avantageusement en un ensemble de brins souples, un profilé souple ou une bande souple ;
- les éléments souples sont agencés de sorte à se percuter en position saillante, de sorte à émettre un bruit participant à tendre à maintenir les animaux d'élevage à distance de ladite face verticale ;
- ledit au moins élément souple est associé à des moyens pour sa manoeuvre entre deux positions : ladite position saillante, lorsque la paroi verticale mobile associée est en position fermée, et une position escamotée, lorsque la paroi verticale mobile associée est en position ouverte ; dans ce cadre, les moyens de manoeuvre consistent de préférence en : des moyens de transmission mécanique, aptes à provoquer la manoeuvre dudit au moins un élément souple entre ses positions saillante et escamotée de manière synchrone avec la manoeuvre de la paroi verticale mobile associée respectivement entre ces positions fermée et ouverte, ou des moyens pour la projection d'un jet d'air sur ledit au moins un élément souple ; dans le cas des moyens de transmission mécanique, ledit au moins un élément souple comporte avantageusement une embase qui est assemblée avec, d'une part, la paroi verticale mobile par le biais de moyens de rotation et, d'autre part, des moyens d'actionnement en rotation de ladite embase ;
- ladite au moins une paroi verticale mobile comporte au moins deux lignes superposées d'au moins un élément souple ;
- la structure de contention consiste en une cage de contention comportant une paroi arrière, une paroi avant et deux parois latérales, et ledit au moins un élément souple équipe une face verticale extérieure de ladite paroi arrière ;
- ledit au moins un élément souple, en position saillante, définit un encombrement horizontal compris entre 20 et 50 cm ;
- ladite au moins une paroi verticale mobile est manoeuvrable en rotation ou en translation.

La présente invention concerne également une installation d'élevage selon la revendication 13 comprenant :
- une structure de contention selon l'invention, et
- un couloir dont une extrémité débouche en regard et à distance de ladite paroi verticale mobile, définissant entre eux un espace intercalaire comportant deux ouvertures latérales, de sorte que : - en position ouverte, ladite paroi verticale mobile obture les ouvertures latérales dudit espace intercalaire, et - en position fermée, ledit au moins un élément souple définit un encombrement horizontal supérieur ou égal à la distance horizontale dudit espace intercalaire.

### DESCRIPTION DETAILLEE DE L'INVENTION

La présente invention sera encore illustrée, sans aucunement être limitée, par la description suivante de deux modes de réalisation de la structure de contention, en relation avec les figures annexées dans lesquelles :
- la figure 1 est une vue générale et en perspective d'un premier mode de réalisation de la structure de contention en forme de cage de contention, dont la paroi arrière mobile est en position fermée et dont les éléments souples consistent en des brins souples en position saillante du type porte-à-faux ;
- la figure 2 est une vue partielle et agrandie de la figure 1, montrant en détails la paroi arrière mobile en position fermée et les éléments souples en position saillante;
- la figure 3 est une vue de côté de la cage de contention selon la figure 1 ;
- la figure 4 est une vue de dessus de la cage de contention selon la figure 1, attenante à l'une des extrémités d'un couloir représenté schématiquement ;
- la figure 5 est une vue générale et en perspective de la cage de contention selon la figure 1, dont la paroi arrière mobile est en position ouverte et dont les éléments souples en position escamotée ;
- la figure 6 est une vue générale et en perspective d'un second mode de réalisation de la structure de contention en forme de cage de contention, dont la paroi arrière mobile est en position fermée et dont les éléments souples consistent en des profilés souples dans une position saillante du type convexe ;
- la figure 7 est une vue de côté de la cage de contention selon la figure 6;
- la figure 8 est une vue de dessus de la cage de contention selon la figure 6;
- la figure 9 est une vue générale et en perspective de la cage de contention selon la figure 6, dont la paroi arrière mobile est en position ouverte et dont les éléments souples sont en position escamotée.

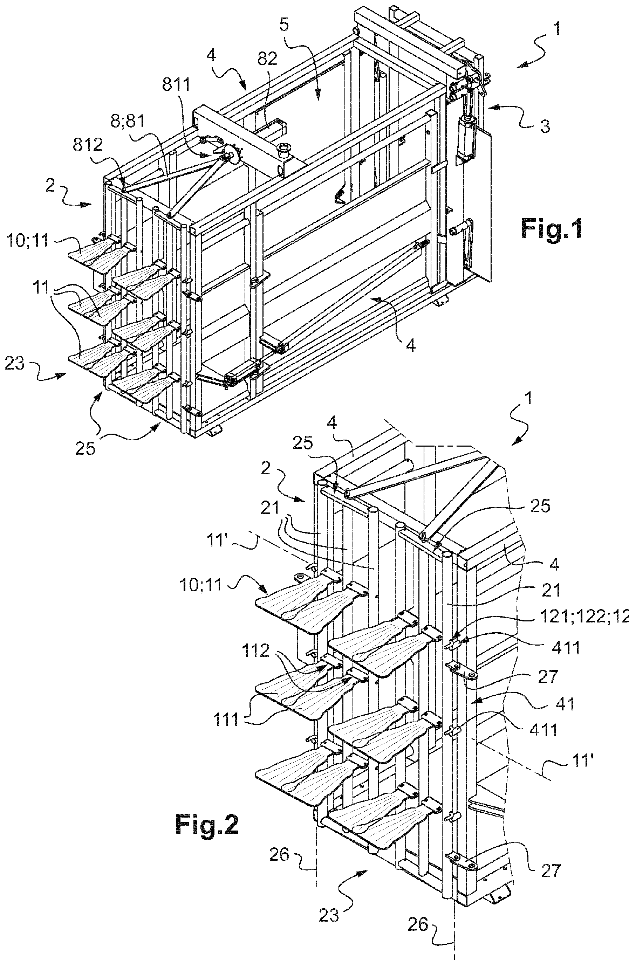

Les figures 1 à 9 illustrent des structures de contention 1 adaptées aux animaux d'élevage, et en particulier pour animal de bétail.

Par « animal de bétail », on entend aussi bien le gros bétail (bovin, cheval, mulet, âne) que le petit bétail (mouton, chèvre, porc).

Par « structure de contention », on entend en particulier le matériel d'élevage destiné à immobiliser un ou plusieurs animaux de bétail, pour les calmer et les manipuler avec une sécurité accrue (pour l'animal et l'éleveur).

Par « structure de contention », on entend notamment une cage de contention ou une enceinte de contention.

Par « cage de contention », on entend en particulier un dispositif adapté au gabarit et à la contention d'un seul animal. Cette cage de contention peut être fixe ou mobile.

En l'espèce, la cage de contention 1 permet différentes actions :
- le tri en fonction de l'âge, le poids, le sexe, etc., permettant d'envoyer les animaux dans des parcs distincts,
- la vaccination des animaux,
- la prise de sang,
- le parage des onglons,
- l'écornage,
- le pesage, etc.

A cet effet, la cage de contention 1 comporte un ensemble de parois verticales 2, 3, 4 qui délimitent un espace de contention 5 destiné à recevoir un unique animal à maintenir.

Les parois verticales 2, 3, 4 comprennent :
- une paroi arrière 2, au niveau de laquelle l'animal pénètre dans l'espace de contention 5 et en regard de laquelle est destiné à se situer l'arrière train de l'animal dans l'espace de contention 5,
- une paroi avant 3, au niveau de laquelle est destinée à se situer la tête de l'animal présent dans l'espace de contention 5, et
- deux parois latérales 4, en regard de chacune desquelles est destiné à se situer l'un des flancs de l'animal présent dans l'espace de contention 5.

Les parois verticales 2, 3, 4 comportent chacune un ensemble d'organes métalliques, mécano-soudés entre eux. En particulier, la paroi arrière 2 comporte plusieurs montants métalliques 21 juxtaposés (figure 2).

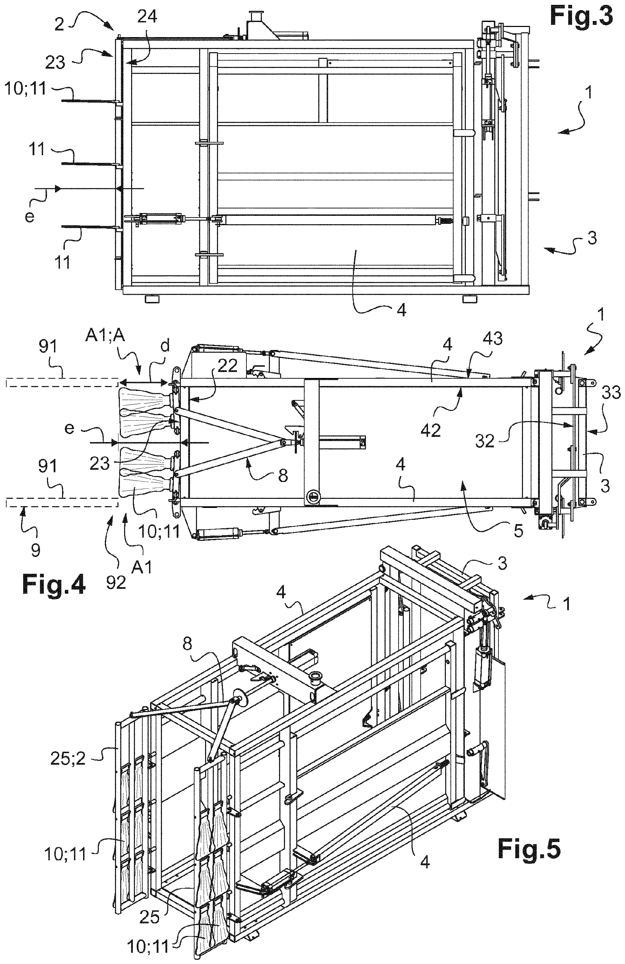

Chaque paroi verticale 2, 3, 4 comporte deux faces verticales, opposées l'une par rapport à l'autre (figure 4) :
- une face intérieure 22, 32, 42, orientée du côté de l'espace de contention 5, et
- une face extérieure 23, 33, 43, orientée à l'opposé de cet espace de contention 5.

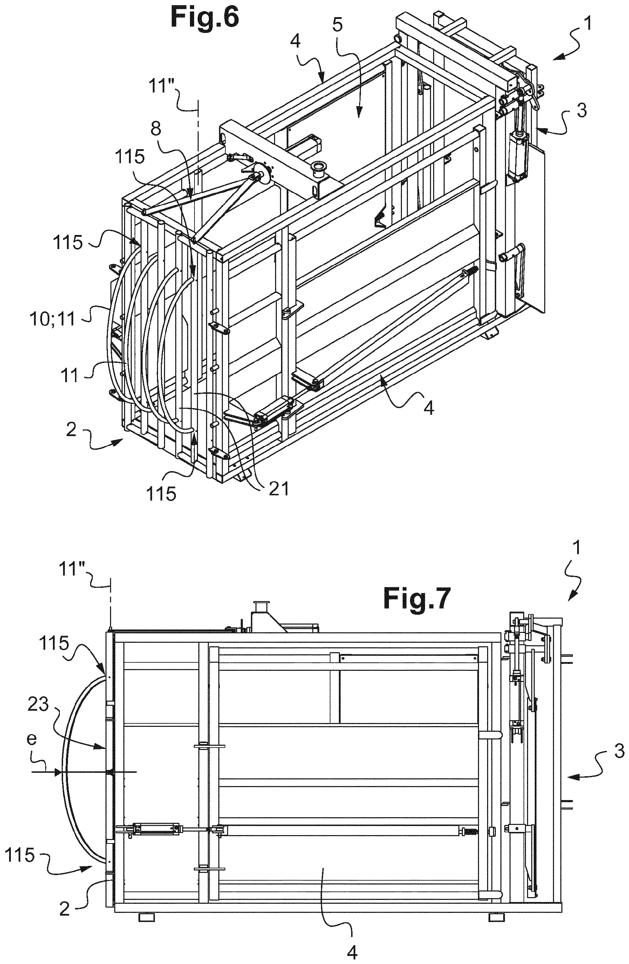

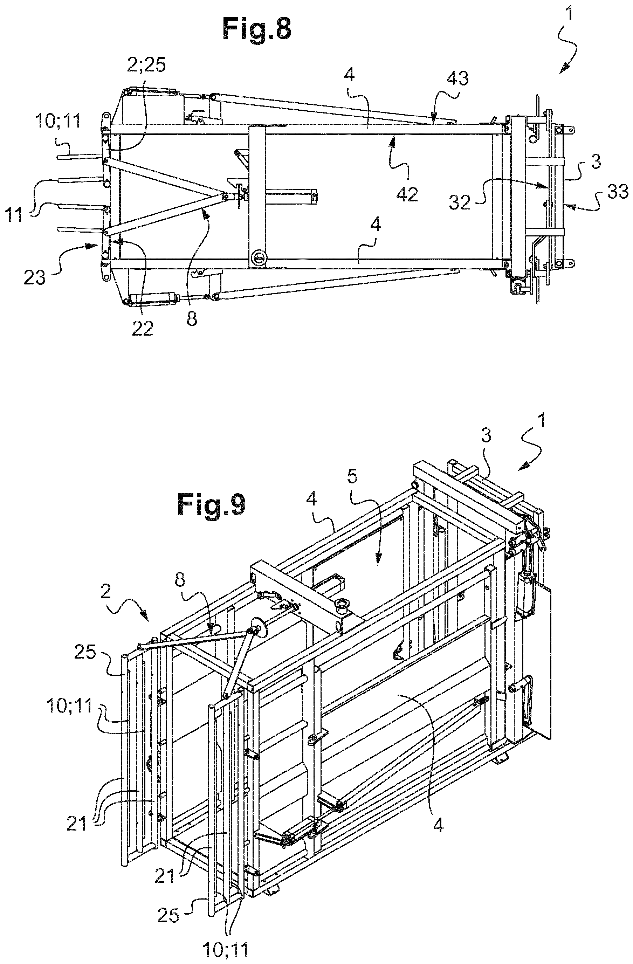

Les parois verticales 2, 3, 4 sont ici chacune mobiles entre deux positions :
- une position ouverte (figures 5 et 9), destinée à autoriser le passage d'animaux entre l'espace de contention 5 et l'extérieur, et
- une position fermée (figures 1 et 6 notamment), destinée à empêcher le passage d'animaux entre ce même espace de contention 5 et l'extérieur.

Cette manoeuvre des parois verticales 2, 3, 4 s'effectue ici par une rotation autour d'axes de rotation verticaux.

En particulier, comme illustré sur les figures 2 et 5, la paroi arrière 2 comporte deux battants 25 (ou deux vantaux) qui sont chacun mobiles en rotation autour d'un axe vertical 26 situé à proximité d'une extrémité arrière de l'une des parois latérales 4.

A ce sujet, l'un des montants 21 de chaque battant 25 est solidarisé, par le biais de charnières 27, avec un montant arrière 41 de l'une des parois latérales 4.

Les parois verticales 2, 3, 4 sont associées à des moyens de manoeuvre 8 entre les positions ouverte et fermée.

En l'espèce, comme illustré notamment sur la figure 1, les moyens de manoeuvre 8 pour les battants 25 de la paroi arrière 2 comprennent une structure de type compas 81 dont :
- les extrémités communes 811 coopèrent avec un actionneur linéaire 82, par exemple un vérin électrique ou pneumatique, et
- les extrémités indépendantes 812 coopèrent chacune avec l'un des battants 25.

De préférence, cette cage de contention 1 comporte encore des moyens pour assurer la pesée de l'animal présent dans l'espace de contention 5.

Ces moyens de pesée (non représentés) consistent par exemple en des barres de pesage ou en un plateau de pesage, équipant la cage de contention 1.

Ces moyens de pesée permettent avantageusement une pesée statique ou une pesée dynamique.

Tel que représenté schématiquement sur la figure 4, au sein d'une installation d'élevage, la structure de contention 1 peut être associée à un couloir 9 permettant d'organiser les animaux en file indienne, en amont de la cage de contention 1.

Ce couloir 9 comporte deux parois latérales 91 qui délimitent une extrémité 92 débouchant en regard de la paroi arrière 2 de la cage de contention 1.

Cette extrémité débouchante 92 se situe à distance de cette paroi arrière 2 pour définir ensemble un espace intercalaire A comportant deux ouvertures latérales A1 qui sont destinées chacune à servir de passages d'homme et qui sont destinées chacune à être fermées par l'un des battants 25 en position ouverte (figures 5 et 9).

Chaque ouverture latérale A1 est délimitée par l'espace séparant l'une des parois latérales 91 du couloir 9 et l'une des parois latérales 4 de la cage de contention 1.

Cet espace A est notamment défini par une distance horizontale d, correspondant à la distance séparant l'extrémité débouchante 92 du couloir 9 et la paroi arrière 2 de la cage de contention 1.

Cette distance horizontale d est avantageusement comprise entre 20 et 50 cm.

Dans un souci de simplification, l'animal présent en regard de la paroi arrière 2, et situé au niveau de cette extrémité débouchante 92 du couloir 9, est désigné « animal amont ».

Selon l'invention, l'une au moins des faces verticales de l'une au moins des parois verticales 2, 3, 4 de la cage de contention 1, en position fermée, est associée à des moyens repoussoirs ou écarteurs 10 qui sont destinés à tendre à maintenir un animal à distance de cette face verticale.

En l'espèce, la paroi arrière 2 de cette cage de contention 1 porte les moyens écarteurs 10 qui sont destinés à maintenir un animal amont à distance de sa face extérieure 23.

De tels moyens écarteurs 10 permettent d'éviter qu'un animal amont ne vienne au contact de la paroi arrière 2 de cette cage de contention 1.

En effet, ces moyens écarteurs 10 sont aptes à provoquer une crainte ou appréhension de l'animal amont, avec en corolaire un phénomène de recul et de maintien en distance de ce dernier par rapport à la paroi 2 équipée.

L'animal présent dans l'espace de contention 5 est ainsi protégé des perturbations provenant habituellement de cet animal amont.

Cet animal en contention peut alors être manipulé de manière optimale et sereine, en particulier dans le cadre de sa pesée.

Pour obtenir ce phénomène, les moyens écarteurs 10 comprennent des éléments souples 11 qui, lorsque la paroi verticale mobile 2 est en position fermée, s'étendent dans une position saillante depuis sa face extérieure 23.

Par « élément souple », on entend en particulier un élément flexible, voire élastique, qui est apte à être déformé par l'animal, sans risque de blessure pour ce dernier, et qui est apte à reprendre sa forme initiale à l'arrêt de la sollicitation.

De tels éléments souples 11 ont en plus l'intérêt d'éviter une propagation de vibrations, notamment par choc ou par percussion, et/ou d'éviter la transmission d'une force d'appui générée par l'animal amont.

En particulier, les éléments souples 11 sont efficaces pour protéger l'animal en contention à l'encontre des perturbations de l'animal amont, cela avantageusement pendant les quelques secondes du temps nécessaire à la pesée (généralement de l'ordre de 5 à 10 s).

L'élément souple 11 est pour cela avantageusement réalisé en un matériau plastique ou en un matériau élastomère.

De plus, chaque élément souple 11 est avantageusement mobile entre deux positions :
- une position saillante, lorsque la paroi arrière 2 associée est en position fermée (notamment figures 1 et 6), et
- une position escamotée, lorsque la paroi arrière 2 associée est en position ouverte (figures 5 et 9).

Dans ce contexte, les éléments souples 11 définissent un encombrement horizontal e (figure 4 notamment) qui est variable.

Par « encombrement horizontal », on entend la distance horizontale maximale définie par les éléments souples 11 s'étendant depuis la face arrière 23 de la paroi arrière 2.

Dans la position saillante, l'encombrement horizontal e est avantageusement compris entre 20 et 50 cm.

Cet encombrement horizontal e est de préférence supérieur, ou égal, à la distance horizontale d de l'espace intercalaire A (figure 4).

Dans cette position saillante, les éléments souples 11 sont avantageusement agencés de sorte à se percuter, afin d'émettre un bruit participant à tendre à maintenir l'animal amont à distance de ladite face extérieure 23.

Ce phénomène de percussion survient au moins au moment du passage en position saillante, du fait de l'énergie cinétique liée au mouvement depuis la position escamotée.

Dans la position escamotée, l'encombrement horizontal e des éléments souples 11 est réduit, voire nul (figures 5 et 9).

Cette position escamotée vise à réduire la gêne pour les opérateurs.

Les moyens écarteurs 10 peuvent se présenter sous différents modes de réalisation.

Selon un premier mode de réalisation représenté sur les figures 1 à 5, les moyens écarteurs 10 comprennent plusieurs éléments souples 11 qui sont répartis selon plusieurs lignes superposées sur la hauteur de la paroi arrière 2.

Chaque élément souple 11 comprend un groupe de brins souples 111 qui ont chacun :
- une extrémité proximale portée par une embase 112 solidarisée avec la paroi arrière 2, et
- une extrémité distale libre.

Par « brin souple », on entend en particulier une fibre (ou poil) réalisée en matériau plastique, par exemple polyamide, polyester, polypropylène ou polypropylène/polyester.

Ces brins doivent également être suffisamment rigides (ou semi-rigides) pour s'étendre en porte-à-faux, à l'horizontale ou approximativement à l'horizontale.

Cet élément souple 11 est par exemple similaire à celui utilisé pour une machine de balayage du sol.

Le passage de chaque élément souple 11, entre les positions saillante et déployée, s'effectue par un mouvement de rotation autour d'un axe de rotation horizontal 11' (figure 2) sur un angle de l'ordre de 90°.

Pour cela, l'embase 112 de chaque élément souple 11 est solidarisée avec la paroi arrière 2 par le biais de moyens de rotation 12 qui font partie de moyens de transmission mécanique pour assurer une manoeuvre synchrone avec la manoeuvre de la paroi arrière 2.

Les moyens de rotation 12 comprennent ici une tige transversale 121 qui traverse des logements complémentaires et coaxiaux ménagés dans les montants 21 de la paroi arrière 2.

La tige transversale 121 est ainsi apte à pivoter librement dans les logements précités.

Les éléments souples 11 sont répartis sur la longueur des tiges transversales 121, chacun intercalé entre deux montants 21.

Chaque embase 112 est verrouillée en rotation avec sa tige transversale 121 associée.

Cette tige transversale 121 comporte un tronçon latéral 122 qui débouche latéralement, au niveau de l'axe vertical 26 du battant 25, et qui est recourbé de sorte à coopérer avec un pion d'appui 411 porté par le montant arrière 41 de l'une des parois verticales latérales 4.

Ces pions d'appui 411 constituent des moyens d'actionnement en rotation des embases 112, et de leurs brins souples 111 associés.

En pratique, en position fermée (figures 1 à 4), la paroi arrière 2 obture la cage de contention 1.

Dans cette position, chaque pion d'appui 411 exerce une poussée sous le tronçon latéral 122 de l'une des tiges transversales 121, de sorte à maintenir les éléments souples 11 dans une position saillante en porte-à-faux depuis la face extérieure 23 de la paroi arrière 2.

Ces éléments souples 11 assurent alors l'effet de répulsion recherché sur l'animal amont, de sorte à maintenir ce dernier à distance de la face extérieure 23 de la paroi arrière 2.

De plus, les éléments souples 11 remplissent l'espace intercalaire A, prévenant l'avancée de l'animal amont en direction des ouvertures latérales A1. Toutefois, un opérateur peut traverser cet espace intercalaire A, passant d'une ouverture latérale A1 à l'autre, en écrasant les éléments souples 11 qui reviennent automatiquement en position.

Les différentes actions souhaitées peuvent être effectuées sur l'animal en contention, avec un risque de perturbations significativement réduit.

Une fois ces actions terminées, l'animal en contention peut être évacué puis la paroi arrière 2 est déplacée en position ouverte pour l'entrée d'un nouvel animal.

Lors de cette manoeuvre en position ouverte (figure 5), les battants 25 de la paroi arrière 2 viennent chacun dans le prolongement de l'une des parois latérales 4 de la cage de contention 1 et viennent chacun obturer l'une des ouvertures latérales A1 de l'espace intercalaire A.

De plus, les tronçons latéraux 122 des tiges transversales 121 s'écartent de leurs pions d'appui 411 respectifs.

Les éléments souples 11 ne sont alors plus maintenus en position saillante, et ils retombent automatiquement dans leurs positions escamotées respectives (à la verticale ou approximativement à la verticale) sous l'effet de leurs propres poids (sous l'effet de la gravité) par rotation autour de leurs axes de rotation 11' respectifs.

Le retour de la paroi arrière 2 en position fermée provoque à nouveau une poussée de chaque pion d'appui 411 sur le tronçon latéral 122 correspondant, de sorte à relever les éléments souples 11 en rotation autour de leurs axes de rotation 11' respectifs et à maintenir les éléments souples 11 dans leurs positions saillantes en porte-à-faux .

Lors de ce déplacement, les brins souples 111 se percutent entre eux et avec ceux des éléments souples 11 juxtaposés de sorte à émettre un bruit participant à tendre à maintenir l'animal en amont à distance de ladite face extérieure 23.

Selon une variante de ce premier mode de réalisation, les éléments souples 11 peuvent consister en des bandes souples 111.

Par « bande souple », on entend en particulier une feuille d'une matière plastique, susceptible de présenter toute épaisseur adaptée (par exemple quelques millimètres).

Les moyens de manoeuvre de ces bandes souples 111 consistent avantageusement en des moyens pour la projection d'un jet d'air sur chacune de ces bandes souples 111 (en particulier leurs faces inférieures respectives). Le jet d'air anime alors ces bandes souples 111, pour tendre à les maintenir en porte-à-faux.

Ces moyens de projection (non représentés) sont avantageusement raccordés aux moyens de manoeuvre 8 de la paroi arrière 2 consistant en des moyens de manoeuvre pneumatique.

En pratique, sous l'effet du flux d'air généré par les moyens de projection en marche lorsque la paroi arrière 2 est en position fermée, les bandes souples 111 flottent en porte-à-faux et se percutent de sorte à émettre un bruit participant à tendre à maintenir l'animal amont à distance de la face extérieure 23.

Inversement, lorsque la paroi arrière 2 est en position ouverte, les moyens de projection sont à l'arrêt et les bandes souples 111 retombent en position escamotée.

Selon un second mode de réalisation représenté sur les figures 6 à 9, les moyens écarteurs 10 comprennent plusieurs éléments souples 11 juxtaposés latéralement.

Chaque élément souple 11 consiste ici en un profilé souple, par exemple un tuyau, dont les deux extrémités 115 sont solidarisées avec la paroi arrière 2 par le biais de moyens de transmission mécanique (non représentés) pour coordonner les positions saillante/escamotée avec les positions fermée/ouverte de cette paroi arrière 2.

Chaque élément souple 11 est apte à subir une déformation du genre cintrage élastique.

Le passage de chaque élément souple 11, entre les positions saillante et escamotée, s'effectue ici par un mouvement en translation de l'une au moins de ces extrémités 115 selon un axe de translation vertical 11 " (figures 6 et 7).

En pratique, en position fermée (figures 6 à 8), la paroi arrière 2 obture la cage de contention 1.

Dans cette position, les éléments souples 11 sont dans une position saillante convexe depuis la face extérieure 23 de la paroi arrière 2.

Ces éléments souples 11 s'étendent chacun dans un plan qui est perpendiculaire au plan général passant par cette paroi arrière 2 fermée.

L'encombrement horizontal e correspond ici à la flèche de ces éléments souples 11.

Les extrémités 115 sont rapprochées, à une distance inférieure à la longueur de l'élément souple 11.

Ces éléments souples 11 assurent alors l'effet de répulsion recherché sur l'animal amont, de sorte à maintenir ce dernier à distance de la face extérieure 23 de la paroi arrière 2.

Lors de sa manoeuvre en position ouverte (figure 9), les extrémités 115 de chaque élément souple 11 s'écartent verticalement l'un de l'autre, de sorte que ce dernier revient en position escamotée.

Les extrémités 115 sont écartées, à une distance correspondant avantageusement approximativement à la longueur de l'élément souple 11 (voire légèrement inférieure à cette dernière).

Chaque élément souple 11 vient avantageusement s'étendre entre deux montants 21 de la paroi arrière 2.

Le retour de la paroi arrière 2 en position fermée provoque à nouveau un rapprochement vertical des extrémités 115 de chaque élément souple 11, de sorte à ramener et à maintenir les éléments souples 11 dans leurs positions saillantes convexes respectives.

De manière générale, les moyens écarteurs 10 selon l'invention ont l'intérêt d'offrir une conception simple tout en assurant un maintien efficace de l'animal amont à distance de la paroi arrière 2 de la cage de contention 1.

De tels moyens écarteurs 10 peuvent être appliqués à toute autre paroi mobile d'une structure de contention (cage de contention ou autre), de sorte à maintenir un animal à distance de cette dernière.

Par exemple, ces moyens écarteurs 10 peuvent être appliqués à une paroi mobile en translation.

## Revendications

1. Structure de contention pour animaux d'élevage, laquelle structure de contention (1) comporte au moins une paroi verticale mobile (2) qui est manoeuvrable entre deux positions :
- une position ouverte, destinée à autoriser le passage d'animaux, et
- une position fermée, destinée à empêcher le passage d'animaux,
laquelle au moins une paroi verticale mobile (2) comporte deux faces verticales (22, 23), opposées l'une par rapport à l'autre,
**caractérisée en ce que** ladite au moins une paroi verticale mobile (2) est associée à au moins un élément souple (11) qui est destiné à s'étendre dans une position saillante par rapport à l'une des faces verticales (23) de ladite au moins une paroi verticale mobile (2) en position fermée, pour tendre à maintenir les animaux d'élevage à distance de ladite face verticale (23).

2. Structure de contention pour animaux d'élevage, selon la revendication 1, **caractérisée en ce que** ledit au moins un élément souple (11) est porté par ladite paroi verticale mobile (2).

3. Structure de contention pour animaux d'élevage, selon l'une quelconque des revendications 1 ou 2, **caractérisée en ce que** ledit au moins élément souple (11) a une forme générale allongée, et
**en ce que**, en position saillante, ledit au moins un élément souple (11) s'étend :
- en porte-à-faux par rapport à ladite paroi verticale mobile (2), ou
- de manière convexe par rapport à ladite paroi verticale mobile (2).

4. Structure de contention pour animaux d'élevage, selon la revendication 3, **caractérisée en ce que** ledit au moins un élément souple (11) consiste en :
- un ensemble de brins souples,
- un profilé souple,
- une bande souple.

5. Structure de contention pour animaux d'élevage, selon l'une quelconque des revendications 1 à 4, **caractérisée en ce que** les éléments souples (11) sont agencés de sorte à se percuter en position saillante, de sorte à émettre un bruit participant à tendre à maintenir les animaux d'élevage à distance de ladite face verticale (23).

6. Structure de contention pour animaux d'élevage, selon l'une quelconque des revendications 1 à 5, **caractérisée en ce que** ledit au moins élément souple (11) est associé à des moyens (12) pour sa manoeuvre entre deux positions :
- ladite position saillante, lorsque la paroi verticale mobile (2) associée est en position fermée, et
- une position escamotée, lorsque la paroi verticale mobile (2) associée est en position ouverte.

7. Structure de contention pour animaux d'élevage, selon la revendication 6, **caractérisée en ce que** les moyens de manoeuvre consistent en :
- des moyens de transmission mécanique (12, 411), aptes à provoquer la manoeuvre dudit au moins un élément souple (11) entre ses positions saillante et escamotée de manière synchrone avec la manoeuvre de la paroi verticale mobile (2) associée respectivement entre ces positions fermée et ouverte ; ou
- des moyens pour la projection d'un jet d'air sur ledit au moins un élément souple (11).

8. Structure de contention pour animaux d'élevage, selon la revendication 7, **caractérisée en ce que**, dans le cas des moyens de transmission mécanique (12, 411), ledit au moins un élément souple (11) comporte une embase (112) qui est assemblée avec, d'une part, la paroi verticale mobile (2) par le biais de moyens de rotation (12) et, d'autre part, des moyens (411) d'actionnement en rotation de ladite embase (112).

9. Structure de contention pour animaux d'élevage, selon l'une quelconque des revendications 1 à 8, **caractérisée en ce que** ladite au moins une paroi verticale mobile (2) comporte au moins deux lignes superposées d'au moins un élément souple (11).

10. Structure de contention pour animaux d'élevage, selon l'une quelconque des revendications 1 à 9, **caractérisée en ce que** ladite structure de contention (1) est adaptée au gabarit d'un animal et **en ce qu'**elle est équipée de moyens de pesée.

11. Structure de contention pour animaux d'élevage, selon l'une quelconque des revendications 1 à 10, **caractérisée en ce qu'**elle consiste en une cage de contention (1) comportant une paroi arrière (2), une paroi avant (3) et deux parois latérales (4), et **en ce que** ledit au moins un élément souple (11) équipe une face verticale extérieure (23) de ladite paroi arrière (2).

12. Structure de contention pour animaux d'élevage, selon l'une quelconque des revendications 1 à 11, **caractérisée en ce que** ledit au moins un élément souple (11), en position saillante, définit un encombrement horizontal compris entre 20 et 50 cm.

13. Installation d'élevage pour animaux d'élevage, comprenant :
- une structure de contention (1) selon l'une quelconque des revendications 1 à 12, et
- un couloir (9) dont une extrémité (91) débouche en regard et à distance de ladite paroi verticale mobile (2), définissant entre eux un espace intercalaire (A) comportant deux ouvertures latérales (A1), de sorte que : - en position ouverte, ladite paroi verticale mobile (2) obture les ouvertures latérales (A1) dudit espace intercalaire (A), et - en position fermée, ledit au moins un élément souple (11) définit un encombrement horizontal (e) supérieur ou égal à la distance horizontale (d) dudit espace intercalaire (A).

## Patentansprüche

1. Struktur zum Festhalten von Zuchttieren, wobei die Struktur zum Festhalten (1) wenigstens eine bewegliche senkrechte Wand (2) aufweist, die zwischen zwei Positionen bewegbar ist, und zwar:
- einer offenen Position, die dazu bestimmt ist, das Hindurchlaufen von Tieren zu ermöglichten, und
- einer geschlossenen Position, die dazu bestimmt ist, das Hindurchlaufen von Tieren zu verhindern,
wobei die wenigstens eine bewegliche senkrechte Wand (2) zwei voneinander abgewandte senkrechte Seiten (22, 23) aufweist,
**dadurch gekennzeichnet, daß** die wenigstens eine bewegliche senkrechte Wand (2) wenigstens einem flexiblen Element (11) zugeordnet ist, das dazu bestimmt ist, sich in einer abstehenden Stellung in Bezug auf eine der senkrechten Seiten (23) der wenigstens einen in geschlossener Position befindlichen senkrechten Wand (2) zu erstrecken, und so dahingehend zu wirkten, daß die Zuchttiere in einem Abstand von der senkrechten Seite (23) gehalten werden.

2. Struktur zum Festhalten von Zuchttieren gemäß Anspruch 1, **dadurch gekennzeichnet, daß** das wenigstens eine flexible Element (11) von der wenigstens einen beweglichen senkrechten Wand (2) getragen wird.

3. Struktur zum Festhalten von Zuchttieren gemäß einem der Ansprüche 1 oder 2, **dadurch gekennzeichnet, daß** das wenigstens eine flexible Element (11) eine allgemeine langgestreckte Form aufweist und daß sich das wenigstens eine flexible Element (11) in abstehender Stellung
- freitragend von der beweglichen senkrechten Wand (2) aus erstreckt oder
- in Bezug auf die bewegliche senkrechte Wand (2) in konvexer Weise erstreckt.

4. Struktur zum Festhalten von Zuchttieren gemäß Anspruch 3, **dadurch gekennzeichnet, daß** das wenigstens eine flexible Element (11) aus
- einer Gesamtheit flexibler Zweige,
- einem flexiblen Profilstück,
- einem flexiblen Band
besteht.

5. Struktur zum Festhalten von Zuchttieren gemäß einem der Ansprüche 1 bis 4, **dadurch gekennzeichnet, daß** die flexiblen Elemente (11) so angeordnet sind, daß sie in abstehender Stellung aufeinanderschlagen, um so ein Geräusch zu erzeugen, das dazu beiträgt, dahingehend zu wirken, daß die Zuchttiere in einem Abstand von der senkrechten Seite (23) gehalten werden.

6. Struktur zum Festhalten von Zuchttieren gemäß einem der Ansprüche 1 bis 5, **dadurch gekennzeichnet, daß** das wenigstens eine flexible Element (11) mit Mitteln zu dessen Bewegen zwischen zwei Positionen zusammenwirkt, und zwar
- der abstehenden Stellung, wenn sich die zugehörige bewegliche senkrechte Wand (2) in der geschlossenen Position befindet, und
- einer zurückgezogenen Stellung, wenn sich die zugehörige bewegliche senkrechte Wand (2) in der offenen Position befindet.

7. Struktur zum Festhalten von Zuchttieren gemäß Anspruch 6, **dadurch gekennzeichnet, daß** die Mittel zum Bewegen
- aus mechanischen Übertragungsmitteln (12, 411), die dazu ausgelegt sind, das Bewegen des wenigstens einen flexiblen Elements (11) zwischen dessen abstehender Stellung und dessen zurückgezogener Stellung in synchroner Weise mit der Bewegung der zugehörigen beweglichen senkrechten Wand (2) zwischen deren geschlossener Position und deren offener Position zu bewirken, oder
- aus Mitteln zum Richten eines Luftstrahls auf das wenigstens eine flexible Element (11)
bestehen.

8. Struktur zum Festhalten von Zuchttieren gemäß Anspruch 7, **dadurch gekennzeichnet, daß** das wenigstens eine flexible Element (11) im Fall der mechanischen Übertragungsmittel (12, 411) einen Sockel (112) aufweist, der einerseits mittels drehbarer Mittel (12) mit der beweglichen senkrechten Wand (2) und andererseits mit Mitteln (411) zum Drehen des Sockels (112) verbunden ist.

9. Struktur zum Festhalten von Zuchttieren gemäß einem der Ansprüche 1 bis 8, **dadurch gekennzeichnet, daß** die wenigstens eine senkrechte Wand (2) wenigstens zwei übereinanderliegende Reihen wenigstens eines flexiblen Elements (11) aufweist.

10. Struktur zum Festhalten von Zuchttieren gemäß einem der Ansprüche 1 bis 9, **dadurch gekennzeichnet, daß** die Struktur zum Festhalten (1) an die Größe eines Tiers angepaßt ist und daß sie mit Mitteln zum Wiegen ausgestattet ist.

11. Struktur zum Festhalten von Zuchttieren gemäß einem der Ansprüche 1 bis 10, **dadurch gekennzeichnet, daß** sie aus einem Käfig zum Festhalten (1) besteht, der eine Rückwand (2), eine Vorderwand (3) und zwei Seitenwände (4) aufweist, und daß mit dem wenigstens einen flexiblen Element (11) eine senkrechte Außenseite (23) der Rückwand (2) ausgestattet ist.

12. Struktur zum Festhalten von Zuchttieren gemäß einem der Ansprüche 1 bis 11, **dadurch gekennzeichnet, daß** das wenigstens eine flexible Element (11) in abstehender Stellung einen horizontalen Platzbedarf zwischen 20 und 50 cm bestimmt.

13. Zuchtanlage für Zuchttiere, die
- eine Struktur (1) zum Festhalten von Zuchttieren gemäß einem der Ansprüche 1 bis 12 und
- einen Gang (9), dessen eines Ende (91) gegenüber der und in einem Abstand zur beweglichen senkrechten Wand (2) mündet, wobei zwischen beiden ein Zwischenraum (A) definiert ist, der zwei seitliche Öffnungen (A1) derart aufweist, daß
= die bewegliche senkrechte Wand (2) in der geöffneten Position die seitlichen Öffnungen (A1) des Zwischenraums (A) verschließt und
= das wenigstens eine flexible Element (11) in der geöffneten Position einen horizontalen Platzbedarf (e) definiert, der größer als oder gleich dem horizontalen Abstand (d) des Zwischenraums (A) ist,
aufweist.

## Claims

1. A containment structure for livestock animals, which containment structure (1) includes at least one mobile vertical wall (2) that is operable between two positions:
- an open position, intended to allow the passage of animals, and
- a closed position, intended to prevent the passage of animals,
which at least one mobile vertical wall (2) includes two vertical faces (22, 23), opposite to each other,
**characterized in that** said at least one mobile vertical wall (2) is associated with at least one flexible element (11) that is intended to extend in a protruding position with respect to one of the vertical faces (23) of said at least one mobile vertical wall (2) in the closed position, to tend to maintain the livestock animals remote from said vertical face (23).

2. The containment structure for livestock animals according to claim 1, **characterized in that** said at least one flexible element (11) is carried by said mobile vertical wall (2).

3. The containment structure for livestock animals according to any one of claims 1 or 2, **characterized in that** said at least one flexible element (11) has a generally elongated shape, and
**in that**, in the protruding position, said at least one flexible element (11) extends:
- cantilevered with respect to said mobile vertical wall (2), or
- convexly with respect to said mobile vertical wall (2).

4. The containment structure for livestock animals according to claim 3, **characterized in that** said at least one flexible element (11) consists in:
- a set of flexible strands,
- a flexible profile,
- a flexible band.

5. The containment structure for livestock animals according to any one of claims 1 to 4, **characterized in that** the flexible elements (11) are arranged so as to hurt each other in the protruding position, so as to emit a noise participating in tending to maintain the livestock animals remote from said vertical face (23).

6. The containment structure for livestock animals according to any one of claims 1 to 5, **characterized in that** said at least one flexible element (11) is associated with means (12) for the operation thereof between two positions:
- said protruding position, when the associated mobile vertical wall (2) is in closed position, and
- said retracted position, when the associated mobile vertical wall (2) is in open position.

7. The containment structure for livestock animals according to claim 6, **characterized in that** the operation means consist in:
- mechanical transmission means (12, 411), adapted to cause the operation of said at least one flexible element (11) between its protruding and retracted position, synchronously with the operation of the associated mobile vertical wall (2) between these closed and open positions, respectively; or
- means for projecting a jet of air to said at least one flexible element (11).

8. The containment structure for livestock animals according to claim 7, **characterized in that**, in the case of mechanical transmission means (12, 411), said at least one flexible element (11) includes a base (112) that is assembled with, on the one hand, the mobile vertical wall (2) through the rotation means (12) and, on the other hand, means (411) for the rotational operation of said base (112).

9. The containment structure for livestock animals according to any one of claims 1 to 8, **characterized in that** said at least one mobile vertical wall (2) includes at least two superimposed lines of at least one flexible element (11).

10. The containment structure for livestock animals according to any one of claims 1 to 9, **characterized in that** said containment structure (1) is adapted to the size of an animal and **in that** it is equipped with weighing means.

11. The containment structure for livestock animals according to any one of claims 1 to 10, **characterized in that** it consists in a containment cage (1) including a rear wall (2), a front wall (3) and two lateral walls (4), and **in that** said at least one flexible element (11) equips an external vertical face (23) of said rear wall (2).

12. The containment structure for livestock animals according to any one of claims 1 to 11, **characterized in that** said at least one flexible element (11), in protruding position, defines a horizontal bulk comprised between 20 and 50 cm.

13. A breeding installation for livestock animals, comprising:
- a containment structure (1) according to any one of claims 1 to 12, and
- a corridor (9), an end (91) of which opens opposite and remote from said mobile vertical wall (2), defining between each other a separation space (A) including two lateral openings (A1), so that: - in the open position, said mobile vertical wall (2) closes the lateral openings (A1) of said separation space (A), and - in the closed position, said at least one flexible element (11) defines a horizontal bulk (e) higher than or equal to the horizontal distance (d) of said separation space (A).
